# DEMANDE DE BREVET EUROPEEN

(11) **EP 4 672 013 A1**
(43) Date de publication de la demande: **31.12.2025**
(21) Numéro de dépôt: 25183033.7
(22) Date de dépôt: 16.06.2025
(51) Int. Cl.: G06F 15/80

(54) **MODULE DE ROUTAGE AUTOMATIQUE DE DONNEES POUR CALCULATEUR A ARCHITECTURE SIMD**

(30) Priorité: 28.06.2024 FR 2407032
(71) Demandeur: Commissariat à l'Energie Atomique et aux Energies Alternatives, 75015 Paris (FR)
(72) Inventeur: MILLET, Raphael, 91191 GIF-SUR-YVETTE CEDEX (FR)
(74) Mandataire: Atout PI Laplace

(57) **Abrégé**

Module de routage automatique de données (ARA) pour un calculateur à architecture de type « instruction unique, données multiples » comprenant plusieurs processeurs élémentaires étant chacun associé à une mémoire locale, le module de routage comprenant :
- Une interface d'entrée comprenant plusieurs buffers d'entrée chacun destiné à recevoir des données lues dans une mémoire locale respective,
- Une interface de sortie comprenant plusieurs buffers de sortie chacun destiné à transmettre des données à écrire dans une mémoire locale respective,
- Pour chaque buffer d'entrée, un sélecteur (SEL) configuré pour sélectionner une ou plusieurs donnée(s) contenue(s) dans le buffer d'entrée,
- Au moins un assembleur (ASB) configuré pour regrouper les données sélectionnées par au moins deux sélecteurs (SEL) dans un buffer d'assemblage,
- un module de transfert (MTR) pour chaque assembleur, configuré pour transférer les données du buffer d'assemblage dudit assembleur vers au moins un buffer de sortie pour les écrire dans au moins une mémoire locale.

## Description

L'invention concerne le domaine des calculateurs à architecture SIMD (Single Instruction Multiple Data) ou « instruction unique, données multiples », par exemple les calculateurs destinés à implémenter des algorithmes d'intelligence artificielle tels que des réseaux de neurones profonds, des algorithmes de traitement d'image ou plus généralement des calculateurs destinés à implémenter des calculs sur de très grands volumes de données.

L'invention porte plus précisément sur un module de routage automatique de données configuré pour déplacer des données dans des mémoires locales de façon fiable et rapide afin de répondre aux besoins de calculs appliqués à des volumes de données conséquents.

Les calculateurs à architecture SIMD sont notamment utilisés pour réaliser des réseaux de neurones profonds ou des dispositifs de traitement d'image. Pour ce type d'application, la problématique des déplacements de données revêt une grande importance. Les réseaux de neurones profonds sont des modèles d'apprentissage automatique qui nécessitent un volume considérable de données pour effectuer des tâches complexes telles que la reconnaissance d'images, la détection d'objets, ou la détection d'anomalies.

Le déplacement de données fait référence à la manipulation et au transfert de ces données d'un emplacement mémoire à un autre. Cela pose un certain nombre de défis dans le contexte des réseaux de neurones profonds. Le volume massif de données utilisées par ces modèles nécessite des ressources de stockage et de traitement adéquates pour gérer efficacement les opérations de déplacement. Les données doivent être transférées de manière rapide et fiable afin de minimiser les temps d'attente et d'optimiser les performances du réseau de neurones.

De plus les réseaux de neurones profonds intègrent une grande variété d'opérations. Celles-ci nécessitent différentes distributions des données. Dans ce contexte, un réarrangement des données dans les mémoires proches calculs peut être nécessaire. Sans dispositif matériel dédié, ce type d'opération peut dégrader significativement les performances globales (temps d'exécution et énergie consommée).

Pour ces raisons, il existe un besoin pour un mécanisme de routage automatique de données qui soit rapide, scalable et modulable en fonction de l'application visée. De façon générale, un tel module de routage est nécessaire pour gérer des déplacements de données pour tout type de calculateur implémentant des opérations appliquées à des volumes de données importants, notamment des opérations de convolution tels que mises en œuvre par des réseaux de neurones profonds.

Le brevet européen EP3335107 décrit un dispositif de calcul pour des applications de traitement d'images. Le dispositif est capable de réarranger les données vidéo de façon à avoir des pixels contigus. Pour ce faire, il utilise des mémoires tampons supplémentaires connectées au flux de données arrivant d'un capteur (caméra).

Cette solution ne supporte qu'un seul type de remise en ordre des pixels de façon contigus. De plus, des mémoires tampons sont nécessaires. Ainsi, cette solution n'est pas optimale en terme d'occupation mémoire et n'est pas scalable ni modulable.

Le brevet américain US6735647 décrit un dispositif et une méthode de réagencement des données à la volée dans un réseau de communication. Il s'agit ici de communications entre des unités distantes et d'une manipulation des données dans les trames qui transportent les données.

Cette solution n'implique qu'une source de données et ne couvre que les transferts via les trames d'un réseau. Elle n'est donc pas applicable à des calculateurs implémentant un réseau de neurones profonds. Elle n'est pas scalable ni modulable.

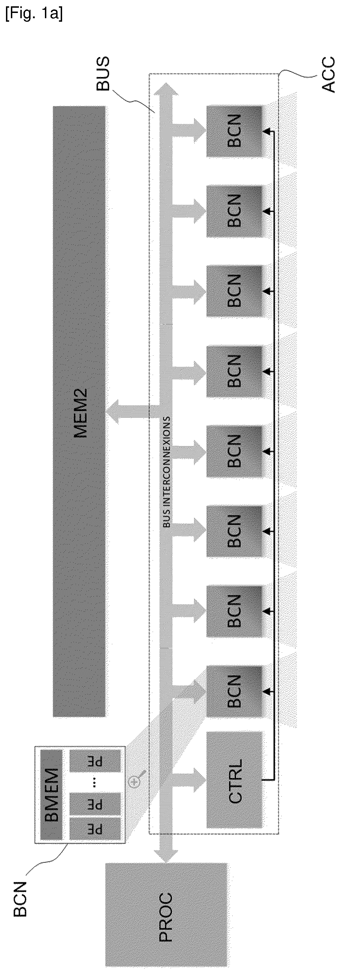

La figure 1a représente une architecture d'un système de calcul basée sur un accélérateur matériel selon l'art antérieur.

Un tel système comporte un processeur hôte PROC, un accélérateur matériel ACC, une mémoire globale de niveau 2 MEM2 et un bus d'interconnexion BUS.

Le processeur hôte PROC est une unité centrale de traitement qui gère l'exécution générale du système, y compris la communication avec l'accélérateur matériel ACC.

L'accélérateur matériel ACC est conçu spécifiquement pour accélérer des types de calculs spécifiques tels que des opérations d'apprentissage automatique ou des calculs intensifs. Il comporte un contrôleur global CTRL et un ensemble de blocs de calculs BCN (par exemple des calculs neuronaux). Chaque bloc de calcul BCN comporte une mémoire de niveau 1 BMEM et un ensemble d'unités de calcul PE. La mémoire de niveau 1 BMEM est typiquement décomposée en au moins un bloc mémoire source et au moins un bloc mémoire destination pour gérer un réagencement de données en mémoire lors des calculs.

La mémoire de niveau 2 MEM2 correspond à la mémoire principale du système embarqué.

Le bus d'interconnexion BUS permet une communication entre le processeur hôte central PROC, l'accélérateur matériel ACC et la mémoire de niveau 2 MEM2.

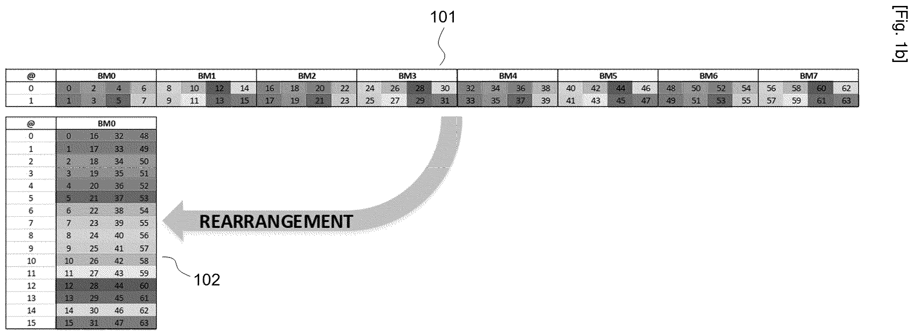

Sur la figure 1b, on a représenté un exemple de réagencement de données en mémoire consistant à passer d'un premier placement mémoire 101 selon un entrelacement des données d'un pas d'entrelacement égal à 2 vers un second placement mémoire 102 selon un entrelacement des données d'un pas d'entrelacement égal à 16.

Afin d'accélérer le calcul, le placement des données en mémoire doit satisfaire certaines contraintes afin d'atteindre les meilleures performances. Les capacités et fonctionnalités spécifiques d'accès aux données de l'accélérateur ACC (par exemple : accès aux BCN voisins) et la distribution des données liée à l'opération sont à prendre en compte dans le placement des données en mémoire.

Aussi, il peut être nécessaire de modifier ce placement des données en mémoire au cours de l'exécution d'une application complète. En effet, celle-ci implique des contraintes différentes au niveau des opérations et de la distribution des données associée.

Quand l'accélérateur ACC n'a pas de fonctionnalité dédiée à ce type de traitement, le processeur hôte PROC doit lire les données depuis les blocs de calcul BCN et réaliser un ensemble de manipulations des données avant de les transférer vers les blocs de calcul BCN avec le nouvel arrangement de données. Ce traitement implique l'exécution d'une routine complexe et particulièrement couteuse en latence et en énergie. Par ailleurs, cela implique de transférer les données dans la mémoire de niveau 2 ce qui casse le parallélisme des calculs et induit une latence supplémentaire.

L'invention propose d'intégrer un module de routage automatique de données dans l'accélérateur matériel ACC de manière à réaliser des opérations de placement, réagencement de données de façon automatique quelle que soit l'application visée. La solution proposée est compatible d'architectures de calculs SIMD intégrant des mémoires distribuées et est scalable et modulable. Elle induit également une faible latence de traitements.

L'invention a pour objet un module de routage automatique de données pour un calculateur à architecture de type « instruction unique, données multiples » comprenant plusieurs processeurs élémentaires étant chacun associé à une mémoire locale, le module de routage comprenant :
- Une interface d'entrée comprenant plusieurs buffers d'entrée chacun destiné à recevoir des données lues dans une mémoire locale respective,
- Une interface de sortie comprenant plusieurs buffers de sortie chacun destiné à transmettre des données à écrire dans une mémoire locale respective,
- Pour chaque buffer d'entrée, un sélecteur configuré pour sélectionner une ou plusieurs donnée(s) contenue(s) dans le buffer d'entrée,
- Au moins un assembleur configuré pour regrouper les données sélectionnées par au moins deux sélecteurs dans un buffer d'assemblage,
- un module de transfert pour chaque assembleur, configuré pour transférer les données du buffer d'assemblage dudit assembleur vers au moins un buffer de sortie pour les écrire dans au moins une mémoire locale.

Dans une variante de réalisation, le module de routage selon l'invention comprend en outre une unité de contrôle comprenant au moins trois contrôleurs identiques respectivement configurés pour piloter l'ensemble des sélecteurs, un assembleur et un module de transfert, chaque contrôleur étant configuré pour générer un signal de pilotage en fonction d'un ensemble de signaux de configurations spécifique.

Selon un aspect particulier de l'invention, un contrôleur comprend au moins un compteur et une unité de décalage configurés à partir de l'ensemble de signaux de configurations pour générer un signal de pilotage.

Selon un aspect particulier de l'invention, l'ensemble de signaux de configuration comprend : une valeur initiale du signal de pilotage, une valeur de longueur de comptage, une valeur de bouclage et une valeur de décalage, la valeur du signal de pilotage étant décalée de la valeur de décalage lorsque le compteur atteint la valeur de longueur de comptage, la valeur du signal de pilotage étant remise à sa valeur initiale lorsqu'elle atteint la valeur de bouclage.

Selon un aspect particulier de l'invention, l'ensemble de signaux de configuration comprend une valeur d'activation de décalage pour activer ou désactiver le décalage du signal de pilotage.

Selon un aspect particulier de l'invention, le décalage du signal de pilotage du module de transfert est désactivé.

Selon un aspect particulier de l'invention, le signal de pilotage de l'ensemble des sélecteurs est configuré pour indiquer à chaque sélecteur quelle donnée sélectionner dans le buffer d'entrée parmi plusieurs données concaténées.

Selon un aspect particulier de l'invention, le signal de pilotage de l'assembleur est configuré pour indiquer à l'assembleur quels sélecteurs choisir en entrée.

Selon un aspect particulier de l'invention, le signal de pilotage du module de transfert est configuré pour indiquer au module de transfert dans quel buffer de sortie transférer les données du buffer d'assemblage.

Selon un aspect particulier de l'invention, les valeurs des signaux de configuration sont définies de manière à ce que le module de routage soit configuré pour recevoir des données lues dans les mémoires locales sous forme entrelacées selon une première configuration d'entrelacement, les buffers d'entrée étant dimensionnés pour recevoir une concaténation de plusieurs données d'une ligne d'une mémoire locale.

Selon un aspect particulier de l'invention, les valeurs des signaux de configuration sont définies de manière à ce que le module de routage soit configuré pour fournir, dans les buffers de sortie, des données destinées à être écrites dans les mémoires locales sous forme entrelacées selon une seconde configuration d'entrelacement différente de la première configuration d'entrelacement.

Dans une variante de réalisation, le module de routage selon l'invention comprend plusieurs assembleurs et plusieurs modules de transfert et un organe de décision pour gérer les priorités de transfert des sorties des modules de transfert vers les buffers de sortie.

L'invention a aussi pour objet un calculateur à architecture de type « instruction unique, données multiples » comprenant un processeur hôte et un accélérateur matériel comprenant plusieurs blocs de calcul, chaque bloc de calcul comprenant une mémoire locale et au moins un processeur élémentaire, un contrôleur global et un module de routage automatique de données selon l'invention configuré pour modifier le placement des données dans les mémoires locales selon une instruction de placement générée par le contrôleur global, le contrôleur global étant configuré pour définir les signaux de configuration de l'unité de contrôle du module de routage automatique à partir de l'instruction de placement.

Selon une variante de réalisation, le calculateur selon l'invention comprend en outre un générateur d'adresses configuré pour générer une adresse de lecture dans les mémoires locales pour lire les données à transférer au module de routage automatique et une adresse d'écriture dans les mémoires locales pour écrire les données fournies par le module de routage automatique.

D'autres caractéristiques et avantages de la présente invention apparaîtront mieux à la lecture de la description qui suit en relation aux dessins annexés suivants.
[Fig. 1a] représente une architecture d'un calculateur comprenant un accélérateur de calcul parallèle selon l'art antérieur,
[Fig. 1b] représente un exemple de réagencement de données en mémoire d'un entrelacement de 2 vers un entrelacement de 16,
[Fig. 2] représente une architecture d'un calculateur comprenant un module de routage automatique selon un mode de réalisation de l'invention,
[Fig. 3] représente une architecture d'un arrangeur de données selon un mode de réalisation de l'invention,
[Fig. 4] représente une architecture d'un module de multitransfert selon un mode de réalisation de l'invention,
[Fig. 5] représente une architecture d'une unité de contrôle et décalage selon un mode de réalisation de l'invention,
[Fig. 6a] illustre une application de l'invention pour réaliser un réarrangement de données d'un entrelacement mémoire de 2 vers un entrelacement mémoire de 16,
[Fig. 6b] illustre un exemple de réagencement de données en mémoire d'un entrelacement de 2 vers un entrelacement de 16,
[Fig. 7] illustre la configuration du module de routage automatique pour réaliser le réagencement des données illustré à la figure 6b,
[Fig. 8] illustre la génération du premier buffer de sortie,
[Fig. 9] illustre la génération du deuxième buffer de sortie,
[Fig. 10] illustre la génération du troisième buffer de sortie,
[Fig. 11] illustre la génération du quatrième buffer de sortie,
[Fig. 12a] illustre une application de l'invention pour réaliser un réarrangement de données d'un entrelacement mémoire de 2 vers un entrelacement mémoire de 4,
[Fig.12b] illustre un exemple de réagencement de données en mémoire d'un entrelacement de 2 vers un entrelacement de 4,
[Fig. 13] illustre la configuration du module de routage automatique pour réaliser le réagencement des données illustré à la figure 12b,
[Fig. 14] illustre la génération du premier buffer de sortie pour l'application de la figure 12a,
[Fig. 15] illustre la génération du second buffer de sortie pour l'application de la figure 12a,
[Fig. 16a] illustre un autre exemple de configuration du module de routage automatique selon un autre mode de réalisation de l'invention,
[Fig. 16b] illustre un exemple de de réagencement de données en mémoire d'un entrelacement de 2 vers un entrelacement de 8,

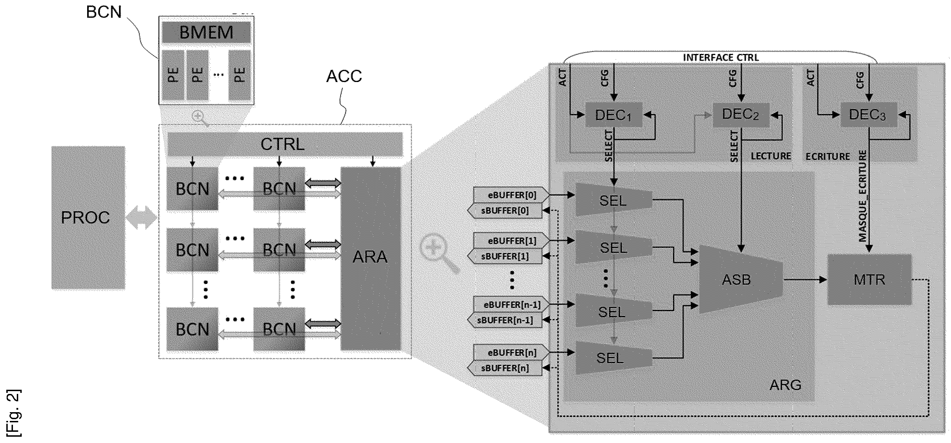

La figure 2 représente un schéma d'une architecture d'un calculateur comprenant un module de routage automatique selon un mode de réalisation de l'invention. Le calculateur de la figure 2 comporte, tout comme celui de la figure 1b, un processeur hôte PROC et un accélérateur matériel ACC comprenant un contrôleur global CTRL, plusieurs blocs de calcul BCN comprenant chacun un bloc mémoire BMEM et plusieurs unités de calcul PE, ainsi qu'un module de routage automatique ARA selon l'invention.

Le module de routage automatique ARA est configuré pour le routage avancé de N sources vers M destinations avec un réagencement automatique des données à la volée. Ce dispositif est adapté pour les architectures de calculs SIMD (Single Instruction Multiple Data), intégrant des mémoires distribuées.

Les blocs de calcul BCN comportent des mémoires BMEM qui sont connectées au module de routage automatique ARA.

Chaque bloc mémoire BMEM comporte au moins une mémoire source accessible en lecture et une mémoire destination accessible en écriture.

Le module de routage automatique ARA comporte une interface d'entrée qui comprend autant de buffers d'entrée que de mémoires sources et une interface de sortie qui comprend autant de buffers de sortie que de mémoires destination.

Les données utiles provenant ou à destination des mémoires sont encapsulées dans les buffers d'entrée (eBUFFER) ou de sortie (sBUFFER) selon un assemblage donné. Par exemple, un buffer de largeur égale à 32 bits encapsule 4 données de 8bits. Plus généralement, un buffer encapsule plusieurs données de même taille.

Le module de routage automatique ARA comporte autant de sélecteurs SEL que de buffers d'entrée et de buffers de sortie, un assembleur ASB, un module de multitransfert MTR et trois unités de contrôle et de décalage DEC₁,DEC₂,DEC₃ matériellement identiques mais configurables de façon indépendante.

Les sélecteurs SEL implémentent le premier niveau de routage, en charge de sélectionner une ou plusieurs données de chaque buffer d'entrée. Tous les sélecteurs SEL sont connectés en sortie à l'entrée de l'assembleur ASB en charge de composer le buffer de destination. Enfin le module de multitransfert MTR permet l'écriture du buffer de destination vers une ou plusieurs mémoires via les buffers de sortie.

Chacun des sous modules précités embarquent une unité de contrôle et de décalage DEC₁,DEC₂,DEC₃ qui est configurée et synchronisée par le contrôleur global CTRL de l'accélérateur matériel ACC via des signaux de configuration CFG et d'activation ACT. Autrement dit le contrôleur global CTRL gère l'activation du module de routage ainsi que sa configuration. Une fois paramétré, le routage est réalisé à la volée de façon automatique. Les signaux de configuration CFG dépendent de l'application visée et de la fonction de routage particulière à mettre en œuvre. Les signaux de pilotage délivrés en sortie des unités de contrôle et de décalage DEC₁,DEC₂,DEC₃ servent à piloter le fonctionnement respectif des sélecteurs SEL, de l'assembleur ASB et du module de multi-transfert MTR.

Ce dispositif de routage ARA permet le réagencement des données à la volée de façon efficace, automatisée, avec une capacité de produire un buffer de sortie à chaque cycle. Aussi, il s'agit d'un dispositif scalable et modulable qui s'adapte selon la taille des buffers mémoires, des données utiles et du nombre de blocs de calcul connectés.

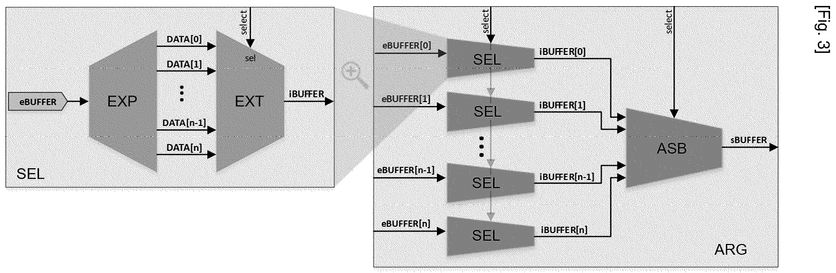

La figure 3 représente un exemple de réalisation du module arrangeur ARG de données selon l'invention qui comprend plusieurs sélecteurs de données SEL et un assembleur ASB.

Le module arrangeur ARG comporte autant de sélecteurs SEL que de buffers d'entrée eBUFFER. Chaque sélecteur SEL est piloté par le même signal de sélection délivré par l'unité de contrôle DEC₁ qui lui indique quelle donnée lire dans le buffer d'entrée qui comporte plusieurs données encapsulées. Le signal de sélection a, par exemple, une taille égale au nombre de données encapsulées dans un buffer.

La donnée sélectionnée est placée dans un buffer intermédiaire iBUFFER fourni en entrée de l'assembleur ASB.

L'assembleur ASB est piloté par un signal de sélection délivré par l'unité de contrôle DEC₂ qui lui indique quels buffers intermédiaires associés à quels sélecteurs il doit sélectionner afin de concaténer les données des buffers intermédiaires sélectionnés dans un buffer de sortie sBUFFER.

Le signal de sélection de l'assembleur ASB a, par exemple, une taille égale au nombre de sélecteurs SEL.

Chaque sélecteur SEL comprend un démultiplexeur EXP configuré pour démultiplexer les données concaténées dans le buffer d'entrée eBUFFER et un multiplexeur EXT piloté par le signal de sélection *select* qui sélectionne la ou les données à fournir dans le buffer intermédiaire iBUFFER.

Le module arrangeur ARG est scalable et peut s'adapter au nombre de connexions externes désirées. Pour chaque connexion externe, il faut instancier un sélecteur SEL et prévoir une entrée supplémentaire à l'assembleur ASB.

Le sélecteur SEL est scalable en ce que la taille du buffer d'entrée eBUFFER et le nombre de données qu'il encapsule ainsi que leur résolution sont configurables. Par exemple, le sélecteur SEL est configurable pour un buffer d'entrée de 32bits contenant 4 données d'une résolution de 8 bits.

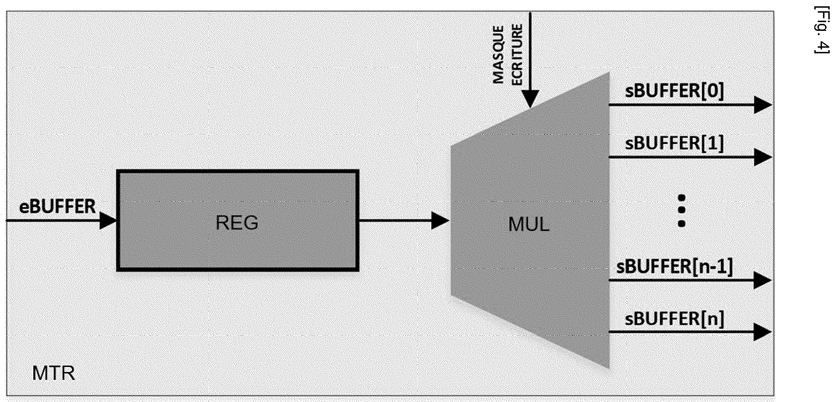

La figure 4 représente un exemple de réalisation du module de multitransfert MTR. Ce module comprend un registre REG pour stocker la donnée en provenance du module arrangeur ARG. La sortie du registre est aiguillée simultanément vers les buffers de sortie du module de routage tels que définis par un signal de pilotage sous forme de masque d'écriture qui est généré par l'unité de contrôle DEC₃. Le nombre de sorties et la taille du masque d'écriture associés sont scalables selon le nombre de blocs de calcul BCN connectés. Comme pour les autres modules, la taille des buffers est également modulable selon les besoins de l'architecture associée.

Le signal masque d'écriture a une taille qui dépend du nombre *Nb de BCN* de blocs de calculs BCN connectés.

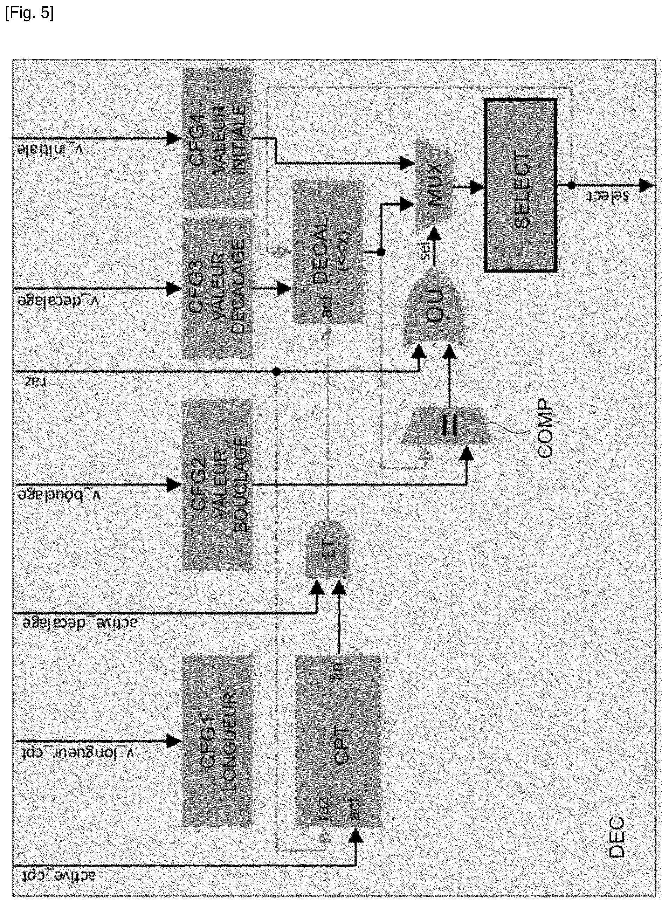

La figure 5 représente un exemple de réalisation d'une unité de contrôle et de décalage DEC. Les trois unités de contrôle et de décalage que comprend le module de routage automatique ont une architecture identique mais sont configurés via un ensemble de signaux de configurations spécifiques à chaque unité.

L'unité de contrôle et de décalage DEC comprend un compteur CPT qui est configuré pour générer un décalage via le registre DECAL selon un délai défini par la longueur du compteur. Le comptage est déclenché via le signal active_cpt produit par le contrôleur global CTRL à chaque accès du module de routage automatique ARA. Le décalage est notamment réalisé via un comparateur COMP associé à une valeur de rebouclage qui, une fois atteinte, force le retour à la valeur initiale.

La collaboration du compteur et du registre de décalage permet l'automatisation du pilotage des différents éléments de routage des données.

De façon plus précise, le signal de sortie du compteur CPT est fourni en entrée d'une porte logique ET qui reçoit sur son autre entrée le signal d'activation du décalage. Si le décalage est activé, le signal de sortie du compteur CPT est propagé en sortie de la porte ET vers le registre à décalage DECAL qui opère un décalage de la valeur contenue dans ce registre d'un nombre de bits égal à la valeur de décalage contenue dans le registre de configuration CFG3.

Un comparateur COMP compare la valeur du registre à décalage DECAL avec la valeur de bouclage stockée dans le registre de configuration CFG2. La sortie du comparateur COMP et un signal de réinitialisation RAZ sont fournis en entrée d'une porte OU. La sortie de la porte OU est un signal de sélection qui vient piloter un multiplexeur MUX. Le multiplexeur MUX reçoit en entrée la valeur du registre à décalage DECAL et la valeur initiale stockée dans le registre de configuration CFG4. Ce mécanisme permet au multiplexeur MUX de sélectionner la valeur initiale lorsque la valeur du registre à décalage atteint la valeur de bouclage. Dans le cas contraire, c'est la valeur du registre à décalage qui est fournie au registre de sélection SELECT. La sortie de ce registre est rebouclée vers le registre à décalage DECAL pour une prochaine opération de décalage.

Sans sortir du cadre de l'invention, d'autres implémentations peuvent être envisagées pour réaliser la fonction de décalage de la valeur initiale telle qu'explicitée ci-dessus.

Les signaux de configurations comprennent les signaux suivants.

Le signal v_longueur_cpt stocké dans le registre de configuration CFG1 donne la longueur de comptage du compteur CPT qui déclenche le décalage, via le registre DECAL, de la valeur initiale stockée dans le registre de configuration CFG4 s'il est activé via le signal d'activation active_decalage.

Le signal active_decalage permet l'activation du décalage qui peut être désactivé. Dans ce cas le signal de sortie « select » reste constant.

Le signal v_bouclage donne une valeur de bouclage qui correspond à la valeur limite avant retour à la valeur initiale.

Le signal raz déclenche la remise à zéro du compteur et force le registre SELECT à la valeur initiale.

Le signal v_decalage donne la valeur de décalage du signal de sélection qui est stockée dans le registre de configuration CFG3.

Le signal v_initiale donne la valeur initiale chargée dans le registre SELECT lors de la remise à zéro ou du rebouclage.

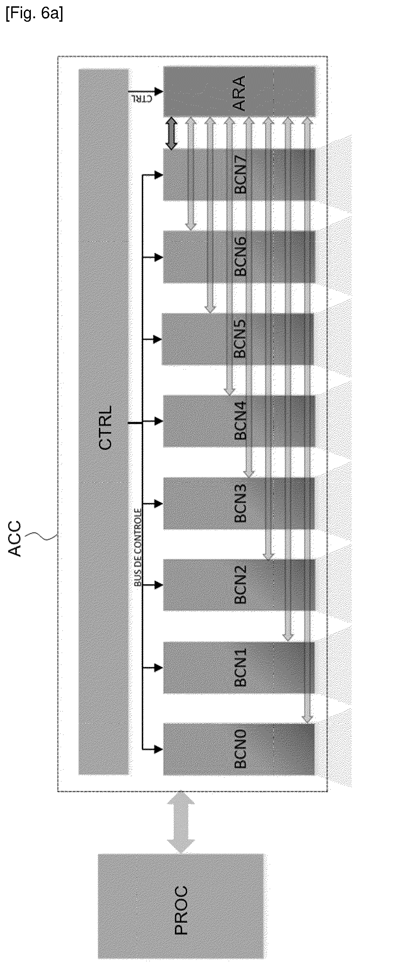

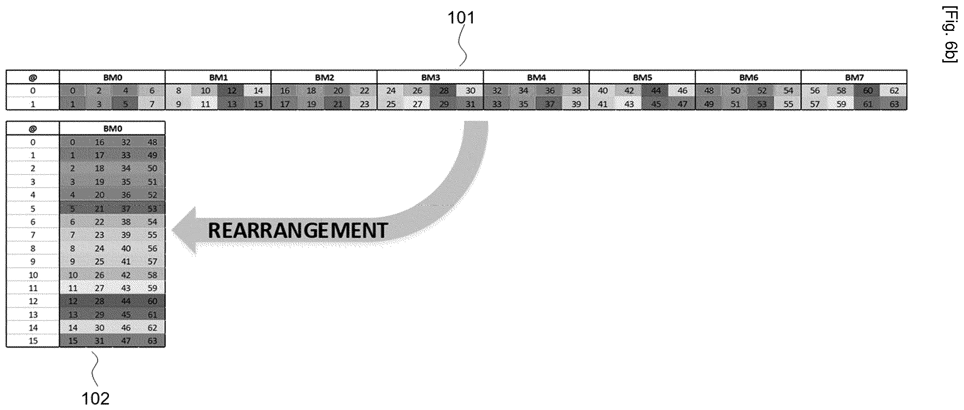

On décrit à présent, à l'appui des figures 6a et 6b, un exemple de mise en œuvre du module de routage automatique ARA selon l'invention pour réaliser un réagencement de données dans les blocs mémoires des blocs de calculs BCN. Dans cet exemple, les données sont arrangées dans les mémoires sources des blocs de calculs BCN avec un entrelacement de 2. On souhaite réarranger les données dans les mémoires destination avec un entrelacement de 16 pour des besoins spécifiques aux calculs à réaliser.

Le stockage de données avec entrelacement est un principe connu en traitement d'image. Il consiste à placer les données (qui correspondent par exemple à des pixels) en colonnes. La valeur d'entrelacement correspond aux nombres de pixels placés en colonne.

Dans l'exemple de la figure 6a, l'accélérateur matériel ACC comprend 8 blocs de calculs connectés au dispositif de routage ARA. La taille des buffers d'entrée est de 32 bits tandis que les données sont codées sur 8 bits. Chaque buffer d'entrée comprend donc 4 données de 8 bits.

Le placement des données d'origine est un ensemble 101 de 64 pixels distribués dans les 8 mémoires des blocs de calculs BCN avec un entrelacement de 2 pixels. Le réagencement des données visé consiste en un entrelacement 102 de 16 pixels dans le premier bloc de calcul BCNO.

Chaque mémoire d'un bloc de calcul est organisée sous forme de lignes de 32 bits qui peuvent comprendre 4 données de 8 bits. Chaque ligne a une adresse.

La figure 6b montre le placement en mémoire des 64 pixels via le numéro du pixel (variant de 0 à 63) dans la case mémoire correspondant des mémoires sources 101 et de la mémoire destination 102.

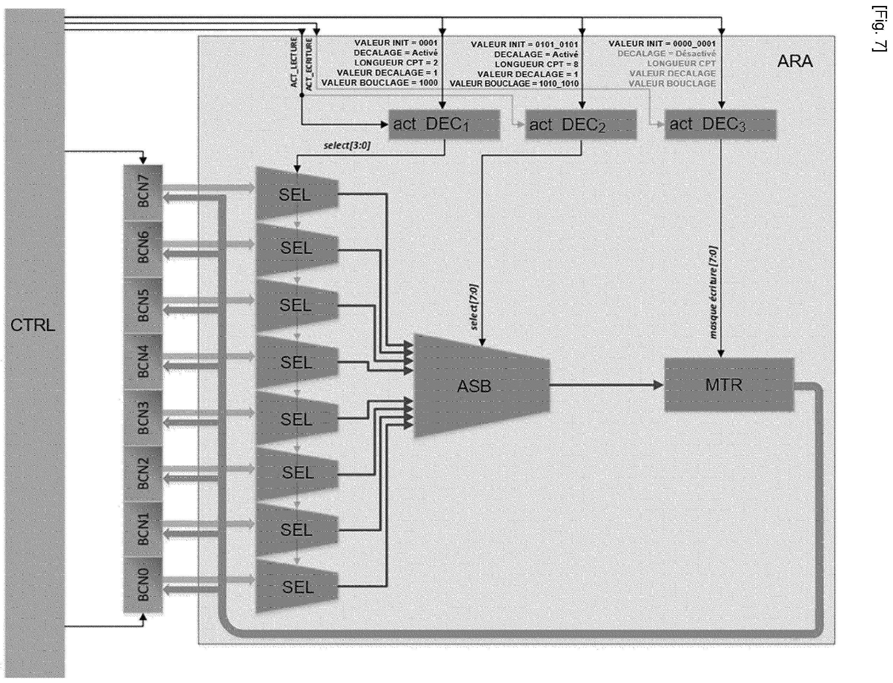

La figure 7 illustre la configuration du module de routage automatique ARA pour réaliser le réagencement des données illustré à la figure 6b.

Le signal de pilotage des sélecteurs SEL généré par la première unité de contrôle DEC₁ est un signal de 4 bits permettant la sélection des 4 données de 8 bits provenant des blocs de calcul BCN et présents dans les buffers d'entrée. Par exemple, les bits à 1 du signal de pilotage indiquent l'indice des données à sélectionner dans le buffer d'entrée.

Le signal de pilotage de l'assembleur ASB généré par la deuxième unité de contrôle DEC₂ est un signal de 8 bits permettant la sélection des sorties des 8 sélecteurs SEL. Par exemple, les bits à 1 de ce signal de pilotage indiquent l'indice des sélecteurs à sélectionner.

Le signal de pilotage du module de multitransfert MTR est un signal de 8 bits qui correspond à un masque d'écriture indiquant le routage parallèle de la sortie du module vers les 8 buffers de sortie correspondant aux 8 blocs de calculs BCN. Par exemple, les bits à 1 de ce signal de pilotage indiquent l'indice des buffers de sortie vers lesquels les données sont transférées.

La configuration des unités de contrôle et de décalage automatique est la suivante.
Unité DEC₁
   - Valeur initiale : 0001
   - Décalage : activé
   - Longueur de compteur : 2
   - Valeur de décalage : 1
   - Valeur de bouclage : 1000
Unité DEC₂
   - Valeur initiale : 0101_0101
   - Décalage : activé
   - Longueur de compteur : 8
   - Valeur de décalage : 1
   - Valeur de bouclage : 1010_1010
Unité DEC₃
   - Valeur initiale : 0000_0001
   - Décalage : désactivé
   - Longueur de compteur : NA
   - Valeur de décalage : NA
   - Valeur de bouclage : NA

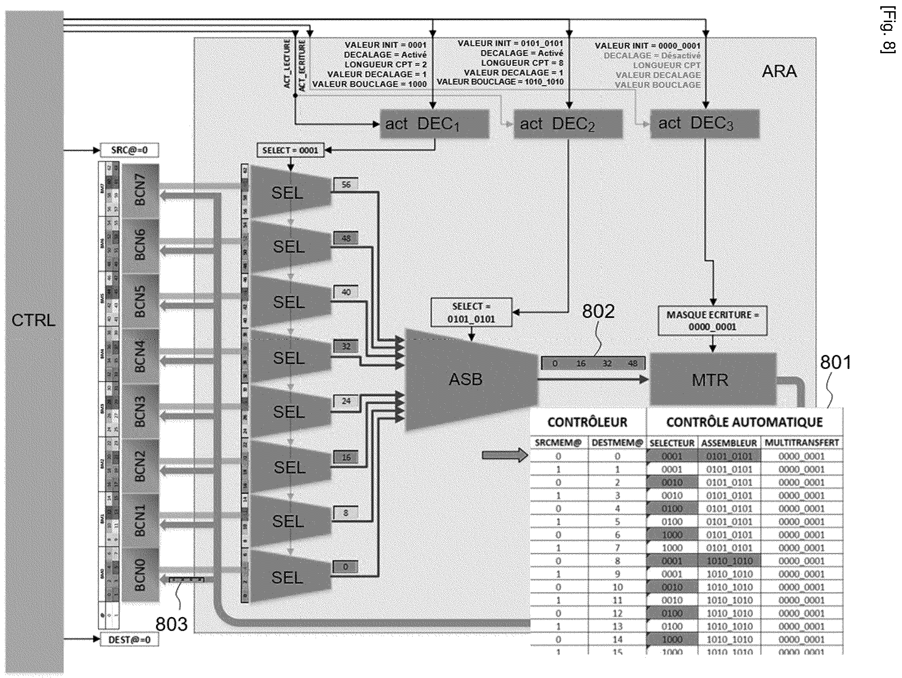

Les figures 8 à 11 illustrent la génération des quatre premiers buffers de sortie du module de routage automatique.

La figure 8 illustre la génération du premier buffer de sortie.

Le tableau 801 donne la séquence des valeurs des trois signaux de pilotage (respectivement dans les colonnes « SELECTEUR », « ASSEMBLEUR » et « MULTITRANSFERT ») pour réaliser le placement en mémoire des 64 pixels avec également les adresses des mémoires sources SRCMEM@ et les adresses des mémoires destination DESTMEM@. Ces deux adresses de lecture et écriture sont gérées directement par le contrôleur global via l'implémentation d'un générateur d'adresses. Par exemple le brevet français FR2202150 du Demandeur décrit un générateur d'adresses pour une architecture de calcul SIMD qui peut être utilisé dans ce cadre.

L'opération de réagencement des données dans les mémoires destination s'effectue en 16 cycles détaillés sur les 16 lignes du tableau 801 repris ci-dessous.

| **CONTRÔLEUR** | | **CONTRÔLE AUTOMATIQUE** | | |
|---|---|---|---|---|
| **SRCMEM@** | **DESTMEM@** | **SELECTEUR** | **ASSEMBLEUR** | **MULTITRANSFERT** |
| **0** | **0** | **0001** | **0101_0101** | **0000_0001** |
| **1** | **1** | **0001** | **0101_0101** | **0000_0001** |
| **0** | **2** | **0010** | **0101_0101** | **0000_0001** |
| **1** | **3** | **0010** | **0101_0101** | **0000_0001** |
| **0** | **4** | **0100** | **0101_0101** | **0000_0001** |
| **1** | **5** | **0100** | **0101_0101** | **0000_0001** |
| **0** | **6** | **1000** | **0101_0101** | **0000_0001** |
| **1** | **7** | **1000** | **0101_0101** | **0000_0001** |
| **0** | **8** | **0001** | **1010_1010** | **0000_0001** |
| **1** | **9** | **0001** | **1010_1010** | **0000_0001** |
| **0** | **10** | **0010** | **1010_1010** | **0000_0001** |
| **1** | **11** | **0010** | **1010_1010** | **0000_0001** |
| **0** | **12** | **0100** | **1010_1010** | **0000_0001** |
| **1** | **13** | **0100** | **1010_1010** | **0000_0001** |
| **0** | **14** | **1000** | **1010_1010** | **0000_0001** |
| **1** | **15** | **1000** | **1010_1010** | **0000_0001** |

La figure 8 illustre plus précisément le premier cycle.

Pour ce premier cycle, chaque buffer d'entrée contient la valeur sur 32 bits lue à l'adresse SRCMEM@=0 de chaque mémoire source de chaque bloc de calcul BCN. Le signal de pilotage des sélecteurs vaut 0001, ainsi la première donnée de chaque buffer d'entrée est sélectionnée. Cela correspond aux pixels d'indices respectifs 0,8,16,24,32,40,48,56.

L'assembleur ASB est piloté par un signal de sélection qui vaut 0101_0101, ainsi les sorties des sélecteurs d'indice 0,2,4 et 6 sont lues et regroupées dans le buffer intermédiaire 802 qui contient les pixels d'indices 0,16,32 et 48 concaténés dans un mot de 32 bits.

Enfin, le module de multitransfert MTR est piloté par un masque d'écriture égal à 0000_0001 ce qui implique l'aiguillage du buffer intermédiaire 802 vers le premier buffer de sortie 803 correspondant au premier bloc de calcul BCNO.

Ce mot de 32 bits est ensuite écrit dans la mémoire destination du bloc de calcul BCNO à l'adresse destination DESTMEM@=0.

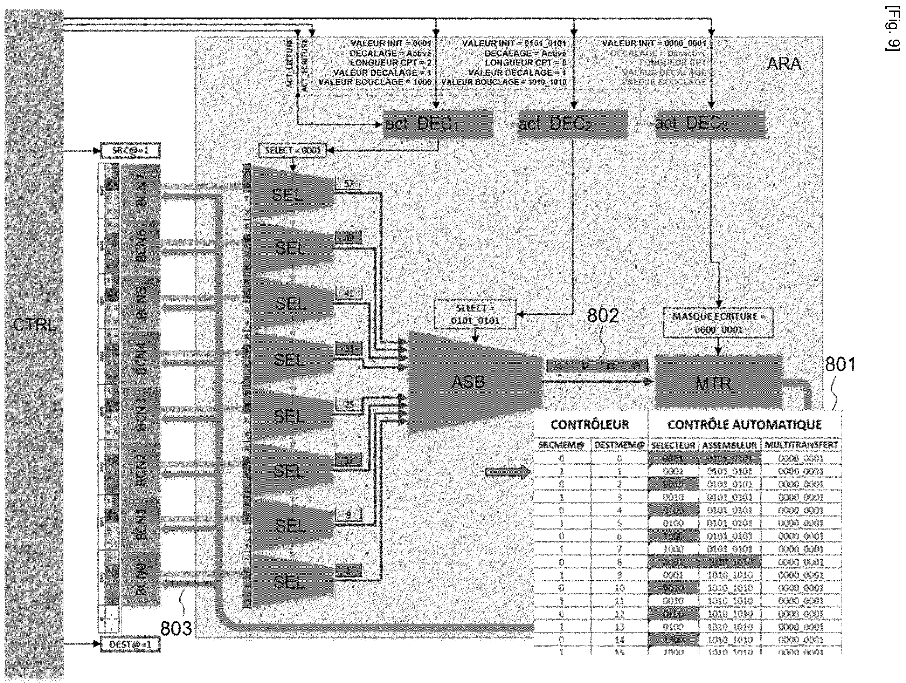

La figure 9 illustre l'exécution du deuxième cycle de la séquence. Les données d'entrée sont lues à l'adresse source SRCMEM@=1 de chaque mémoire source de chaque bloc de calcul.

Le signal de pilotage des sélecteurs vaut toujours 0001, ainsi la première donnée de chaque buffer d'entrée est sélectionnée. Cela correspond aux pixels d'indices respectifs 1,9,17,25,33,41,49,57.

L'assembleur ASB est piloté par un signal de sélection qui vaut 0101_0101, ainsi les sorties des sélecteurs d'indice 0,2,4 et 6 sont lues et regroupées dans le buffer intermédiaire 802 qui contient les pixels d'indices 1,17,33 et 49 concaténés dans un mot de 32 bits.

Enfin, le module de multitransfert MTR est piloté par un masque d'écriture égal à 0000_0001 ce qui implique l'aiguillage du buffer intermédiaire 802 vers le premier buffer de sortie 803 correspondant au premier bloc de calcul BCNO.

Ce mot de 32 bits est ensuite écrit dans la mémoire destination du bloc de calcul BCNO à l'adresse destination DESTMEM@=1.

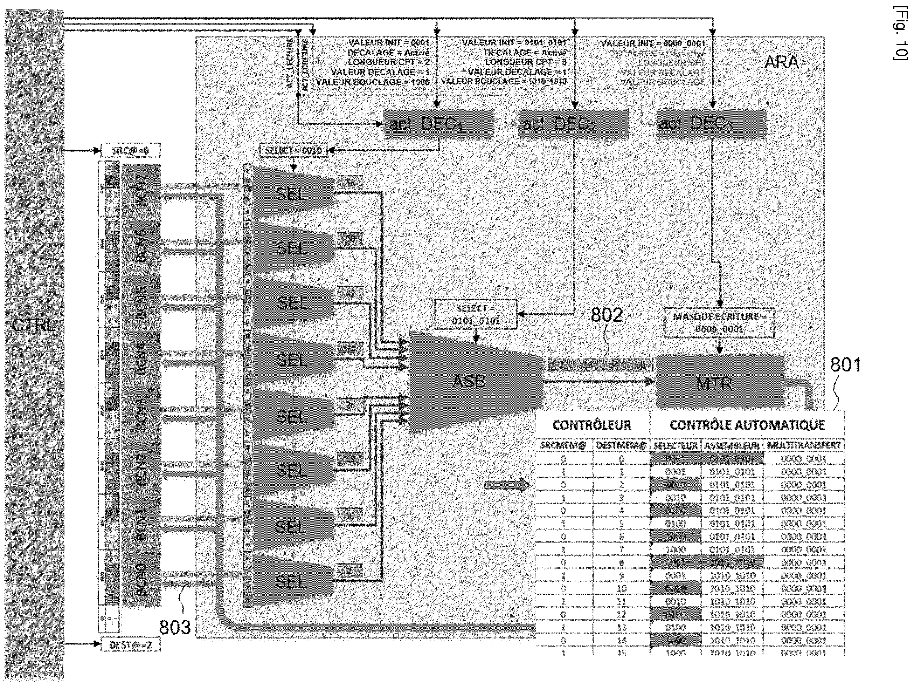

La figure 10 illustre l'exécution du troisième cycle de la séquence. Les données d'entrée sont lues à l'adresse source SRCMEM@=0 de chaque mémoire source de chaque bloc de calcul.

Le signal de pilotage des sélecteurs vaut 0010, ainsi la deuxième donnée de chaque buffer d'entrée est sélectionnée. Cela correspond aux pixels d'indices respectifs 2,10,18,26,34,42,50,58.

L'assembleur ASB est piloté par un signal de sélection qui vaut 0101_0101, ainsi les sorties des sélecteurs d'indice 0,2,4 et 6 sont lues et regroupées dans le buffer intermédiaire 802 qui contient les pixels d'indices 2,18,34,50 concaténés dans un mot de 32 bits.

Enfin, le module de multitransfert MTR est piloté par un masque d'écriture égal à 0000_0001 ce qui implique l'aiguillage du buffer intermédiaire 802 vers le premier buffer de sortie 803 correspondant au premier bloc de calcul BCNO.

Ce mot de 32 bits est ensuite écrit dans la mémoire destination du bloc de calcul BCNO à l'adresse destination DESTMEM@=2.

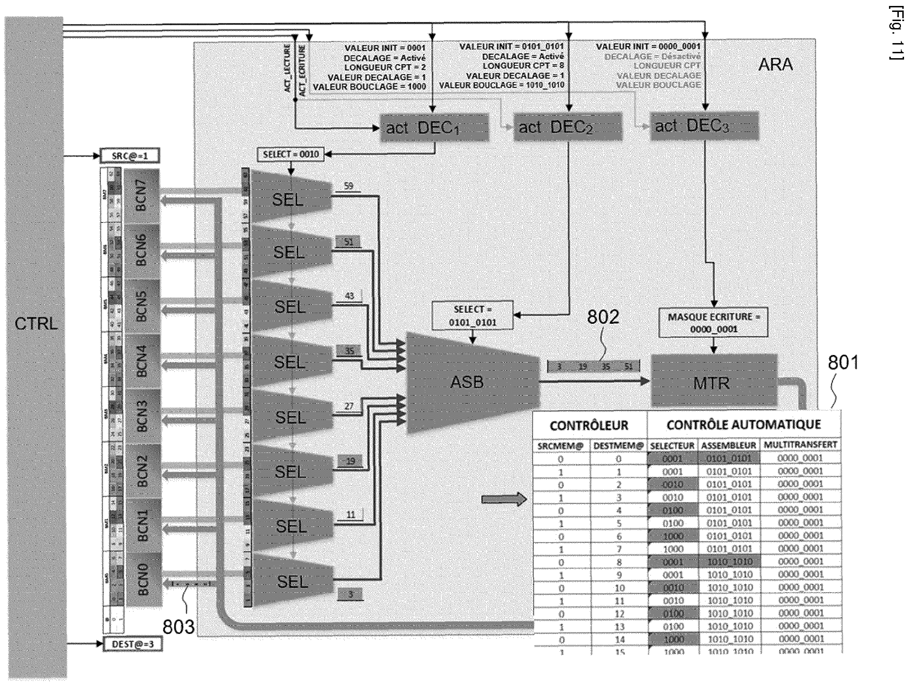

La figure 11 illustre l'exécution du quatrième cycle de la séquence. Les données d'entrée sont lues à l'adresse source SRCMEM@=1 de chaque mémoire source de chaque bloc de calcul.

Le signal de pilotage des sélecteurs vaut 0010, ainsi la deuxième donnée de chaque buffer d'entrée est sélectionnée. Cela correspond aux pixels d'indices respectifs 3, 11,19, 27, 35, 43, 51, 59.

L'assembleur ASB est piloté par un signal de sélection qui vaut 0101_0101, ainsi les sorties des sélecteurs d'indice 0, 2, 4 et 6 sont lues et regroupées dans le buffer intermédiaire 802 qui contient les pixels d'indices 3,19, 35, 51 concaténés dans un mot de 32 bits.

Enfin, le module de multitransfert MTR est piloté par un masque d'écriture égal à 0000_0001 ce qui implique l'aiguillage du buffer intermédiaire 802 vers le premier buffer de sortie 803 correspondant au premier bloc de calcul BCNO.

Ce mot de 32 bits est ensuite écrit dans la mémoire destination du bloc de calcul BCNO à l'adresse destination DESTMEM@=3.

La séquence se poursuit avec les cycles suivants illustrés dans le tableau 801 jusqu'à obtenir le placement en mémoire destination avec un entrelacement des données égal à 16.

Le tableau 801 montre le fonctionnement des décalages appliqués aux signaux de pilotage des sélecteurs et de l'assembleur ainsi que le masque d'écriture qui pilote le module de multitransfert implémentés par les unités de contrôle et de décalage telles que décrites à la figure 5.

Dans cet exemple, le signal de pilotage des sélecteurs (unité DEC₁) est initialisé à la valeur 0001. Cette valeur est décalée d'une valeur de 1 bit tous les 2 cycles puisque la longueur du compteur est égale à 2. Cette valeur est réinitialisée à la valeur initiale 0001 lorsque la valeur du signal atteint la valeur de bouclage 1000.

Le signal de pilotage de l'assembleur (unité DEC₂) est initialisé à la valeur 0101_0101. Cette valeur est décalée d'une valeur de 1 bit tous les 8 cycles puisque la longueur du compter est égale à 8. Cette valeur est réinitialisée à la valeur initiale après avoir atteint la valeur de bouclage 1010_1010.

Le signal de pilotage du module de multitransfert (unité DEC₃) est initialisé à la valeur 0000_0001 et reste constant puisque le décalage est désactivé pour cette unité.

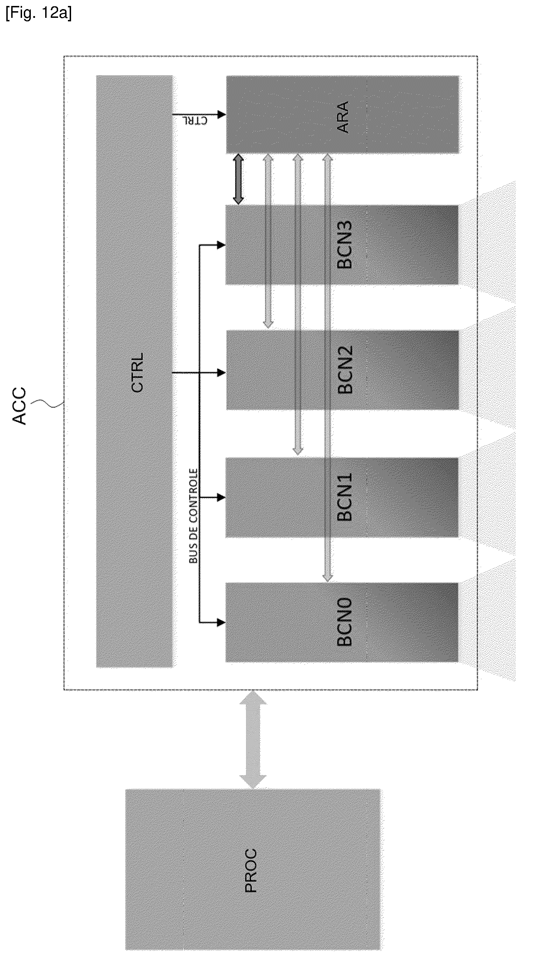

Les figures 12a à 15 illustrent un autre exemple d'application du module de routage automatique selon l'invention.

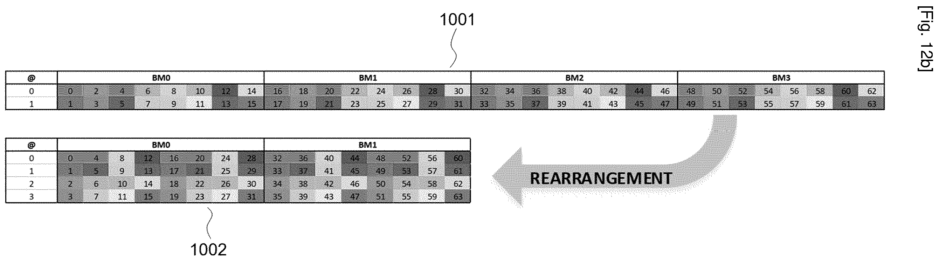

Dans l'exemple de la figure 12a, l'accélérateur matériel ACC comprend quatre blocs de calcul BCN. Les mémoires des blocs de calcul, ainsi que les buffers d'entrée et sortie du module de routage ARA ont des tailles de 32 bits pour encapsuler 8 données codées sur 4 bits chacune. La figure 12b représente le placement des données en mémoire pour cet exemple.

Dans l'exemple de la figure 12b, le placement des données dans les mémoires sources 1001 est réalisé selon un entrelacement de 2 pixels.

Le module de routage ARA est configuré pour réaliser un placement des données dans les mémoires destination 1002 selon un entrelacement de 4 pixels.

Dans l'exemple de la figure 12b, un ensemble de 64 pixels est ainsi distribué dans les 4 mémoires sources des 4 blocs de calcul BCN. Le réagencement des données consiste à distribuer ces 64 pixels dans deux mémoires destination des deux premiers blocs de calcul BCNO, BCN1 selon un entrelacement de 4 pixels.

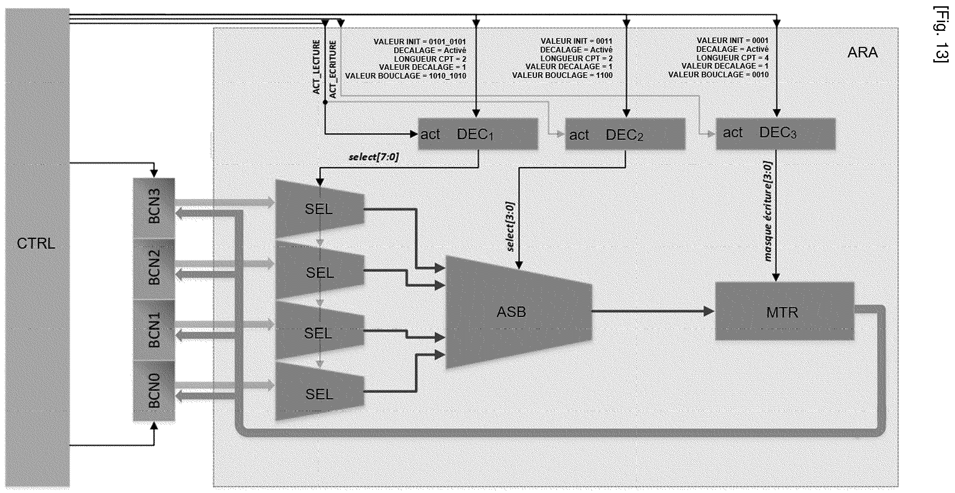

La figure 13 illustre la configuration du module de routage automatique ARA pour réaliser le réagencement des données illustré à la figure 12b.

Le signal de pilotage des sélecteurs SEL généré par la première unité de contrôle DEC₁ est un signal de 8 bits permettant la sélection des 8 données de 4 bits provenant des blocs de calcul BCN et présents dans les buffers d'entrée.

Le signal de pilotage de l'assembleur ASB généré par la deuxième unité de contrôle DEC₂ est un signal de 4 bits permettant la sélection des sorties des 4 sélecteurs SEL.

Le signal de pilotage du module de multitransfert MTR est un signal de 4 bits qui correspond à un masque d'écriture indiquant le routage parallèle de la sortie du module vers les 4 buffers de sortie correspondant aux 4 blocs de calculs BCN.

La configuration des unités de contrôle et décalage automatique est la suivante.
Unité DEC₁
   - Valeur initiale : 0101_0101
   - Décalage : activé
   - Longueur de compteur : 2
   - Valeur de décalage : 1
   - Valeur de bouclage : 1010_1010
Unité DEC₂
   - Valeur initiale : 0011
   - Décalage : activé
   - Longueur de compteur : 4
   - Valeur de décalage : 2
   - Valeur de bouclage : 1100
Unité DEC₃
   - Valeur initiale : 0001
   - Décalage : activé
   - Longueur de compteur : 4
   - Valeur de décalage : 1
   - Valeur de bouclage : 0010

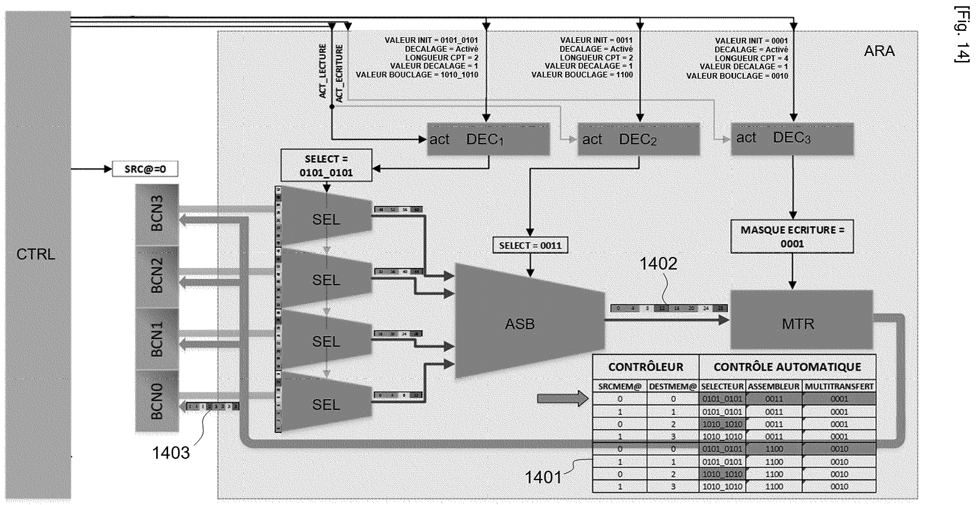

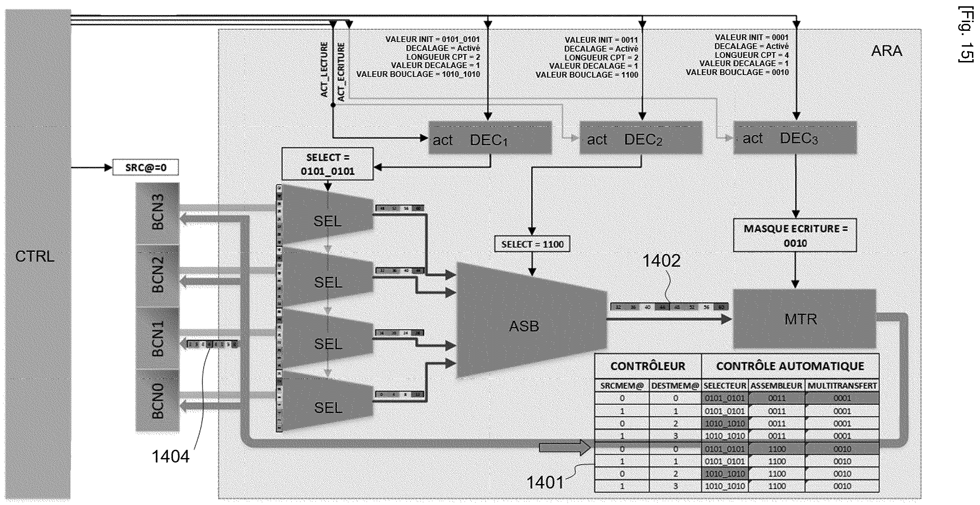

Les figures 14 et 15 illustrent la génération de deux buffers de sortie du module de routage automatique.

La figure 14 illustre la génération du premier buffer de sortie

Le tableau 1401 donne la séquence des valeurs des trois signaux de pilotage pour réaliser le placement en mémoire des 64 pixels avec également les adresses des mémoires sources SRCMEM@ et les adresses des mémoires destination DESTMEM@. Ces deux adresses de lecture et écriture sont gérées directement par le contrôleur global via l'implémentation d'un générateur d'adresses multi dimensions.

L'opération de réagencement des données dans les mémoires destination s'effectue en 8 cycles détaillés sur les 8 lignes du tableau 1401 repris ci-dessous.

| **CONTRÔLEUR** | | **CONTRÔLE AUTOMATIQUE** | | |
|---|---|---|---|---|
| **SRCMEM@** | **DESTMEM@** | **SELECTEUR** | **ASSEMBLEUR** | **MULTITRANSFERT** |
| **0** | **0** | **0101_0101** | **0011** | **0001** |
| **1** | **1** | **0101_0101** | **0011** | **0001** |
| **0** | **2** | **1010_1010** | **0011** | **0001** |
| **1** | **3** | **1010_1010** | **0011** | **0001** |
| **0** | **0** | **0101_0101** | **1100** | **0010** |
| **1** | **1** | **0101_0101** | **1100** | **0010** |
| **0** | **2** | **1010_1010** | **1100** | **0010** |
| **1** | **3** | **1010_1010** | **1100** | **0010** |

Pour le premier cycle, chaque buffer d'entrée contient la valeur sur 32 bits lue à l'adresse SRCMEM@=0 de chaque mémoire source de chaque bloc de calcul BCN. Le signal de pilotage des sélecteurs vaut 0101_0101, ainsi une donnée sur 2 est lue dans chaque buffer d'entrée comme représenté sur les sorties des sélecteurs SEL.

L'assembleur ASB est piloté par un signal de sélection qui vaut 0011, ainsi les sorties des sélecteurs d'indice 0 et 1 sont lues et regroupées dans le buffer intermédiaire 1402 qui contient les pixels d'indices 0,4,8,12,16,20,24,28 concaténés dans un mot de 32 bits.

Enfin, le module de multitransfert MTR est piloté par un masque d'écriture égal à 0001 ce qui implique l'aiguillage du buffer intermédiaire 1402 vers le premier buffer de sortie 1403 correspondant au premier bloc de calcul BCNO.

Ce mot de 32 bits est ensuite écrit dans la mémoire destination du bloc de calcul BCNO à l'adresse destination DESTMEM@=0.

La figure 15 illustre la génération du cinquième buffer de sortie correspondant au 5eme cycle de la séquence 1401.

Pour le 5eme cycle, chaque buffer d'entrée contient la valeur sur 32 bits lue à l'adresse SRCMEM@=0 de chaque mémoire source de chaque bloc de calcul BCN. Le signal de pilotage des sélecteurs vaut 0101_0101, ainsi une donnée sur 2 est lue dans chaque buffer d'entrée comme représenté sur les sorties des sélecteurs SEL.

L'assembleur ASB est piloté par un signal de sélection qui vaut 1100, ainsi les sorties des sélecteurs d'indice 2 et 3 sont lues et regroupées dans le buffer intermédiaire 1402 qui contient les pixels d'indices 32,36,40,44,48,52,56,60 concaténés dans un mot de 32 bits.

Enfin, le module de multitransfert MTR est piloté par un masque d'écriture égal à 0010 ce qui implique l'aiguillage du buffer intermédiaire 1402 vers le deuxième buffer de sortie 1404 correspondant au deuxième bloc de calcul BCN1.

Ce mot de 32 bits est ensuite écrit dans la mémoire destination du bloc de calcul BCNO à l'adresse destination DESTMEM@=0.

Les autres cycles de fonctionnement du module de routage ARA sont réalisés conformément aux signaux de pilotage décrits dans le tableau 1401.

Le tableau 1401 montre le fonctionnement des décalages appliqués aux signaux de pilotage des sélecteurs et de l'assembleur ainsi que le masque d'écriture qui pilote le module de multitransfert implémentés par les unités de contrôle et de décalage telles que décrites à la figure 5.

Dans cet exemple, le signal de pilotage des sélecteurs (unité DEC₁) est initialisé à la valeur 0101_0101. Cette valeur est décalée d'une valeur de 1 bit tous les 2 cycles puisque la longueur du compteur est égale à 2. Cette valeur est réinitialisée à la valeur initiale après que la valeur du signal atteint la valeur de bouclage 1010_1010.

Le signal de pilotage de l'assembleur (unité DEC₂) est initialisé à la valeur 0011. Cette valeur est décalée d'une valeur de 2 bits tous les 4 cycles puisque la longueur du compteur est égale à 4. Cette valeur est réinitialisée à la valeur initiale après avoir atteint la valeur de bouclage 1100.

Le signal de pilotage du module de multitransfert (unité DEC₃) est initialisé à la valeur 0011. Cette valeur est décalée d'une valeur de 1 bit tous les 4 cycles puisque la longueur du compteur est égale à 4. Cette valeur est réinitialisée à la valeur initiale après avoir atteint la valeur de bouclage 0010.

De façon générale, le module de routage automatique ARA selon l'invention est configurable pour réaliser différentes fonctions de réagencement de données. En particulier, il est configurable, via les signaux de configuration des unités de contrôle et décalage pour réaliser tout réagencement d'un placement mémoire selon un premier niveau d'entrelacement vers un placement mémoire selon un second niveau d'entrelacement différent. La taille des buffers d'entrée ainsi que la taille des données est également configurable. Le module peut être adapté à différents nombres de blocs de calculs en modifiant le nombre d'entrées/sorties et de sélecteurs.

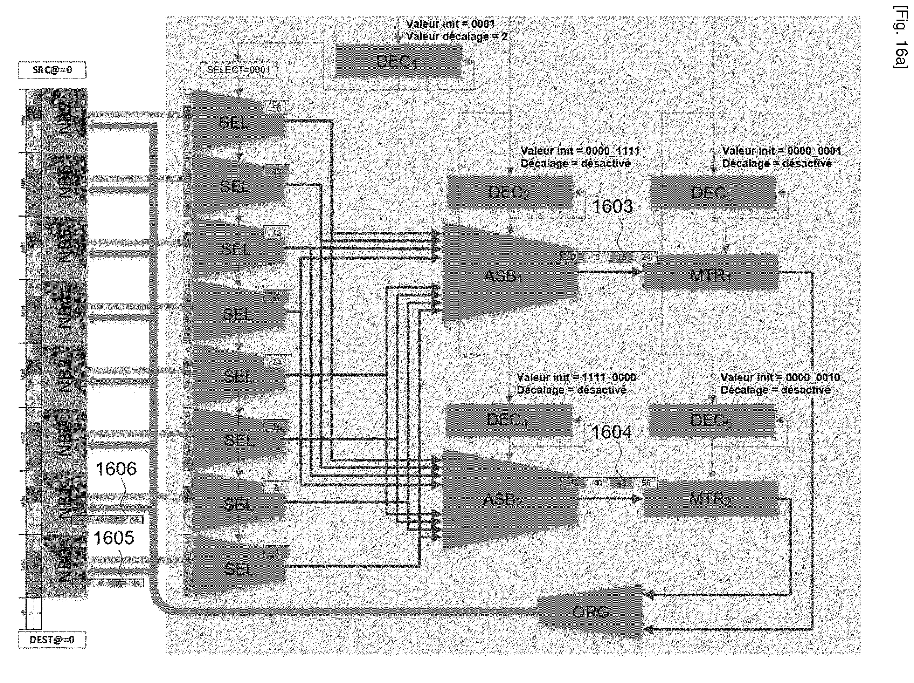

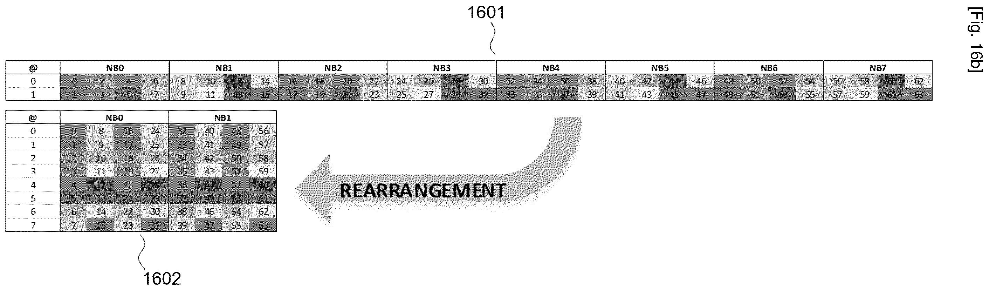

Les figures 16a et 16b représentent un autre mode de réalisation du module de routage automatique selon l'invention comprenant plusieurs assembleurs ASB1,ASB2 et plusieurs modules de multitransfert MTR1,MTR2.

Dans ce mode de réalisation, un organe de décision ORG est connecté aux sorties des modules de multitransfert afin d'implémenter un mécanisme de gestion de priorités pour l'aiguillage des buffers de sorties de ces modules vers les buffers de sortie du module de routage.

Chaque assembleur et chaque module de multitransfert est associé à une unité de contrôle et décalage. Ainsi, sur l'exemple de la figure 16a, le module de routage ARA comprend 5 unités DEC₁, DEC₂, DEC₃, DEC₄, DEC₅.

Un tel mode de réalisation présente l'avantage d'augmenter le parallélisme des traitements.

Le mode de réalisation de la figure 16a peut être configuré pour réaliser les mêmes types de routage ou réagencement de données en mémoire que ceux décrits précédemment.

Par exemple, il peut réaliser un réagencement de données depuis un placement des données en mémoire source avec un entrelacement égal à 2 vers un placement des données en mémoire destination avec un entrelacement égal à 8, comme illustré à la figure 16b par les tables de mémoire source 1601 et destination 1602. Les données sont codées sur 8 bits et les buffers sont de dimensions 32 bits. Le nombre de blocs de calcul est égal à 8.

Sur la figure 16a, on a représenté le premier cycle de fonctionnement du module de routage ARA.

La configuration des unités de contrôle et décalage automatique est la suivante.
Unité DEC₁
   - Valeur initiale : 0001
   - Décalage : activé
   - Longueur de compteur : 2
   - Valeur de décalage : 1
   - Valeur de bouclage : 1000
Unité DEC₂
   - Valeur initiale : 0000_1111
   - Décalage : désactivé
   - Longueur de compteur : NA
   - Valeur de décalage : NA
   - Valeur de bouclage : NA
Unité DEC₃
   - Valeur initiale : 0000_0001
   - Décalage : désactivé
   - Longueur de compteur : NA
   - Valeur de décalage : NA
   - Valeur de bouclage : NA
Unité DEC₄
   - Valeur initiale : 1111_0000
   - Décalage : désactivé
   - Longueur de compteur : NA
   - Valeur de décalage : NA
   - Valeur de bouclage : NA
Unité DEC₅
   - Valeur initiale : 0000_0010
   - Décalage : désactivé
   - Longueur de compteur : NA
   - Valeur de décalage : NA
   - Valeur de bouclage : NA

Pour ce premier cycle, chaque buffer d'entrée contient la valeur sur 32 bits lue à l'adresse SRCMEM@=0 de chaque mémoire source de chaque bloc de calcul BCN. Le signal de pilotage des sélecteurs vaut 0001, ainsi la première donnée de chaque buffer d'entrée est sélectionnée. Cela correspond aux pixels d'indices respectifs 0,8,16,24,32,40,48,56.

Le premier assembleur ASB₁ est piloté par un signal de sélection qui vaut 0000_1111, ainsi les sorties des sélecteurs d'indice 0,1,2,3 sont lues et regroupées dans le buffer intermédiaire 1603 qui contient les pixels d'indices 0,8,16,24 concaténés dans un mot de 32 bits.

Le second assembleur ASB₂ est piloté par un signal de sélection qui vaut 1111_0000, ainsi les sorties des sélecteurs d'indice 4,5,6,7 sont lues et regroupées dans le buffer intermédiaire 1604 qui contient les pixels d'indices 32,40,48,56 concaténés dans un mot de 32 bits.

Le premier module de multitransfert MTR₁ est piloté par un masque d'écriture égal à 0000_0001 ce qui implique l'aiguillage du buffer intermédiaire 1603 vers le premier buffer de sortie 1605 correspondant au premier bloc de calcul BCNO.

Le second module de multitransfert MTR₂ est piloté par un masque d'écriture égal à 0000_0010 ce qui implique l'aiguillage du buffer intermédiaire 1604 vers le deuxième buffer de sortie 1606 correspondant au deuxième bloc de calcul BCN1.

L'organe de décision ORG implémente une règle de priorité qui donne, par exemple, la priorité d'écriture au premier module de multitransfert MTR₁ en cas de conflit d'écritures entre les modules de multitransfert MTR₁ et MTR₂.

L'invention peut être implémentée à partir d'éléments matériels et/ou logiciels.

En particulier le module de routage automatique selon l'invention peut être implémenté dans un accélérateur matériel réalisé au moyen d'un ou plusieurs éléments parmi un processeur embarqué ou un dispositif spécifique. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »). Le dispositif selon l'invention peut utiliser un ou plusieurs circuits électroniques dédiés ou un circuit à usage général. La technique de l'invention peut se réaliser sur une machine de calcul reprogrammable (un processeur ou un micro-contrôleur par exemple) exécutant un programme comprenant une séquence d'instructions, ou sur une machine de calcul dédiée (par exemple un ensemble de portes logiques comme un FPGA ou un ASIC, ou tout autre module matériel).

## Revendications

1. Module de routage automatique de données (ARA) pour un calculateur à architecture de type « instruction unique, données multiples » comprenant plusieurs processeurs élémentaires étant chacun associé à une mémoire locale, le module de routage comprenant :
- Une interface d'entrée comprenant plusieurs buffers d'entrée chacun destiné à recevoir des données lues dans une mémoire locale respective,
- Une interface de sortie comprenant plusieurs buffers de sortie chacun destiné à transmettre des données à écrire dans une mémoire locale respective,
- Pour chaque buffer d'entrée, un sélecteur (SEL) configuré pour sélectionner une ou plusieurs donnée(s) contenue(s) dans le buffer d'entrée,
- Au moins un assembleur (ASB) configuré pour regrouper les données sélectionnées par au moins deux sélecteurs (SEL) dans un buffer d'assemblage,
- un module de transfert (MTR) pour chaque assembleur, configuré pour transférer les données du buffer d'assemblage dudit assembleur vers au moins un buffer de sortie pour les écrire dans au moins une mémoire locale.

2. Module de routage automatique de données selon la revendication 1 comprenant en outre une unité de contrôle comprenant au moins trois contrôleurs identiques (DEC₁,DEC₂,DEC₃) respectivement configurés pour piloter l'ensemble des sélecteurs (SEL), un assembleur (ASB) et un module de transfert (MTR), chaque contrôleur étant configuré pour générer un signal de pilotage en fonction d'un ensemble de signaux de configurations spécifique.

3. Module de routage automatique de données selon la revendication 2 dans lequel un contrôleur (DEC₁,DEC₂,DEC₃) comprend au moins un compteur (CPT) et une unité de décalage configurés à partir de l'ensemble de signaux de configurations pour générer un signal de pilotage.

4. Module de routage automatique de données selon la revendication 3 dans lequel l'ensemble de signaux de configuration comprend : une valeur initiale du signal de pilotage, une valeur de longueur de comptage, une valeur de bouclage et une valeur de décalage, la valeur du signal de pilotage étant décalée de la valeur de décalage lorsque le compteur atteint la valeur de longueur de comptage, la valeur du signal de pilotage étant remise à sa valeur initiale lorsqu'elle atteint la valeur de bouclage.

5. Module de routage automatique de données selon l'une des revendications 3 ou 4 dans lequel l'ensemble de signaux de configuration comprend une valeur d'activation de décalage pour activer ou désactiver le décalage du signal de pilotage.

6. Module de routage automatique de données selon la revendication 5 dans lequel le décalage du signal de pilotage du module de transfert (MTR) est désactivé.

7. Module de routage automatique de données selon l'une quelconque des revendications 2 à 6 dans lequel le signal de pilotage de l'ensemble des sélecteurs est configuré pour indiquer à chaque sélecteur quelle donnée sélectionner dans le buffer d'entrée parmi plusieurs données concaténées.

8. Module de routage automatique de données selon l'une quelconque des revendications 2 à 7 dans lequel le signal de pilotage de l'assembleur est configuré pour indiquer à l'assembleur quels sélecteurs choisir en entrée.

9. Module de routage automatique de données selon l'une quelconque des revendications 2 à 8 dans lequel le signal de pilotage du module de transfert est configuré pour indiquer au module de transfert dans quel buffer de sortie transférer les données du buffer d'assemblage.

10. Module de routage automatique de données selon l'une quelconque des revendications 2 à 9 dans lequel les valeurs des signaux de configuration sont définies de manière à ce que le module de routage soit configuré pour recevoir des données lues dans les mémoires locales sous forme entrelacées selon une première configuration d'entrelacement, les buffers d'entrée étant dimensionnés pour recevoir une concaténation de plusieurs données d'une ligne d'une mémoire locale.

11. Module de routage automatique de données selon la revendication 10 dans lequel les valeurs des signaux de configuration sont définies de manière à ce que le module de routage soit configuré pour fournir, dans les buffers de sortie, des données destinées à être écrites dans les mémoires locales sous forme entrelacées selon une seconde configuration d'entrelacement différente de la première configuration d'entrelacement.

12. Module de routage automatique de données selon l'une quelconque des revendications précédentes comprenant plusieurs assembleurs (ASB₁,ASB₂) et plusieurs modules de transfert (MTR₁,MTR₂) et un organe de décision (ORG) pour gérer les priorités de transfert des sorties des modules de transfert vers les buffers de sortie.

13. Calculateur à architecture de type « instruction unique, données multiples » comprenant un processeur hôte (PROC) et un accélérateur matériel (ACC) comprenant plusieurs blocs de calcul (BCN), chaque bloc de calcul (BCN) comprenant une mémoire locale (BMEM) et au moins un processeur élémentaire (PE), un contrôleur global (CTRL) et un module de routage automatique de données (ARA) selon l'une quelconque des revendications précédentes configuré pour modifier le placement des données dans les mémoires locales selon une instruction de placement générée par le contrôleur global, le contrôleur global étant configuré pour définir les signaux de configuration de l'unité de contrôle du module de routage automatique à partir de l'instruction de placement.

14. Calculateur selon la revendication 13 comprenant en outre un générateur d'adresses configuré pour générer une adresse de lecture dans les mémoires locales pour lire les données à transférer au module de routage automatique et une adresse d'écriture dans les mémoires locales pour écrire les données fournies par le module de routage automatique.
